# EUROPÄISCHE PATENTSCHRIFT

(11) **EP 2 418 717 B1**
(45) Veröffentlichungstag und Bekanntmachung des Hinweises auf die Patenterteilung: **16.10.2013**
(21) Anmeldenummer: 11006530.7
(22) Anmeldetag: 09.08.2011
(51) Int. Cl.: H01M 2/20, H01M 10/50, H01M 2/30, H01M 2/02

(54) **Temperierelement in einem Akkupack**
Tempering element in a battery pack
Elément de thermorégulation dans une batterie

(30) Priorität: 09.08.2010 DE 102010033792
(43) Veröffentlichungstag der Anmeldung: 15.02.2012
(73) Patentinhaber: ads-tec GmbH, 70771 Leinfelden-Echterdingen (DE)
(72) Erfinder: Speidel, Thomas, 71706 Markgröningen (DE); Greif, Andreas, 73235 Weilheim/Teck (DE)
(74) Vertreter: Wasmuth, Rolf

(56) Entgegenhaltungen:
- WO-A1-2009/060697
- WO-A2-2010/031856
- DE-A1-102009 006 540
- JP-A- 2006 344 572

## Beschreibung

Die Erfindung betrifft einen Akkupack bestehend aus einer Mehrzahl einzelner Akkuzellen, insbesondere Flachzellen nach dem Oberbegriff des Anspruchs 1.

Es ist bekannt, zur Bereitstellung größerer Leistungen, wie sie z. B. für Elektrofahrzeuge benötigt werden, eine Vielzahl von Akkupacks zu einem größeren Akkublock zusammenzufassen. Zur Erzielung einer ausreichend hohen Ausgangsspannung werden die Akkuzellen eines Akkupacks elektrisch in Reihe geschaltet, wozu wechselweise die Anoden- und Kathodenableiter benachbarter Akkuzellen miteinander zu verbinden sind. Dabei muss gewährleistet sein, dass die elektrischen Verbindungen hochstromfest sind, da bei der Verwendung in Kraftfahrzeugen hohe Spitzenströme auftreten können.

Jede Akkuzelle entwickelt sowohl bei der Stromabgabe als auch bei der Stromaufnahme Wärme, die zu einer erhöhten Temperatur des gesamten Akkublocks führen kann. Um Schädigungen der Akkuzelle und/oder des Akkublocks zu vermeiden, soll einerseits die Verlustwärme sicher abgeführt werden, andererseits bei zu niedrigen Außentemperaturen eine Temperierung der Akkupacks möglich sein.

In der DE 10 2009 006 540 A1 sind Lithium-Ionen-Zellen beschrieben, die jeweils in einem formstabilen Gehäuse angeordnet sind. Die Gehäuse mehrerer Lithium-Ionen-Zellen werden zwischen Druckplatten verspannt und bilden eine Art Akkupack. Die Anodenableiter und Kathodenableiter der Zellen werden über Kontaktelemente elektrisch miteinander verbunden, wobei jedes Kontaktelement als Temperierelement ausgebildet ist und Kühlrippen trägt. Zur Kühlung der Ableiter wird ein Luftstrom über die Kühlrippen geführt, wobei zur Unterstützung der Strömungsführung längs der Kühlrippen ein U-Profil als Strömungsleitelement vorgesehen sein kann. Über den Luftstrom kann zwar Wärme abgeführt werden, jedoch ist aufgrund der offenen Kanalausbildung eine effektive Kühlung nur schwer und oft nur zufällig zu erreichen.

Die WO 2009/060697 A1 offenbart einen Akkupack in einem Kraftfahrzeug, dessen elektrische Ableiter von einem Kühlmittel durchflossen sind. Dabei sind zwei elektrisch voneinander getrennte Kühlkreisläufe ausgebildet, jeweils für alle Anodenableiter (positive Pole) und jeweils für alle Kathodenableiter (negative Pole). Der durch die elektrische Trennung der Kühlkreisläufe notwendige technische Aufwand ist sehr hoch.

Die JP 2006 344 572 A1 beschreibt die elektrische Kontaktierung nebeneinander liegender Akkuflachzellen über Kontaktelemente, die als Profilkörper ausgeführt sein können. Die Profilkörper liegen in einer U-förmigen Rinne einer gemeinsamen Aufnahme.

In der WO 2010/031856 A2 ist eine Anordnung aus Einzelzellen gezeigt, die unter Verwendung einer gemeinsamen Abdeckplatte einen Akkupack ausbilden. In der Abdeckplatte sind Schlitze zum Durchtritt von Anodenableitem und Kathodenableitern vorgesehen, wobei in der Abdeckplatte Kontaktelemente vorgesehen sein können. Zwischen den Akkuzellen und der Abdeckplatte können Kühlkörper zur Abfuhr der anfallenden Verlustwärme angeordnet sein. Dadurch ergibt sich ein relativ hoher Aufbau der Gesamtanordnung.

Der Erfindung liegt die Aufgabe zugrunde, in einem Akkupack aus einer Mehrzahl einzelner Akkuzellen bei geringem Aufwand und bei kompaktem Aufbau eine betriebssichere Abfuhr der anfallenden Verlustwärme sicherzustellen.

Die Aufgabe wird bei einem gattungsgemäßen Akkupack nach den kennzeichnenden Merkmalen des Anspruchs 1 gelöst.

Die Ableiter der miteinander zu verbindenden Akkuzellen liegen an dem aus einem Profilkörper bestehenden Temperierelement an, das aus einem elektrisch leitenden Material besteht und so selbst als Kontaktbrücke die elektrische Verbindung zwischen den Ableitern herstellt. Der Profilkörper des Temperierelementes weist einen offenen Querschnitt mit einem Einlass und einem Auslass auf, wobei der Einlass mit einem Medium zuführenden Kanal aus einem elektrisch nicht-leitenden Material und der Auslass mit einem Medium abführenden Kanal aus einem elektrisch nicht leitenden Material verbunden ist. Dadurch steht das Temperierelement in Wärme übertragender Verbindung mit einem strömenden Medium, über das dem Temperierelement Wärme zugeführt oder auch von dem Temperierelement Wärme abgeführt werden kann. Unter dem Begriff "anliegen" wird sowohl ein Andrücken des Ableiters an das Temperierelement verstanden als auch ein stoffschlüssiges Verbinden des Ableiters mit dem Temperierelement mittels Schweißen oder Löten, ein formschlüssiges Verbinden wie auch ein Anschrauben oder dgl..

Da das Temperierelement mit innigem elektrischen Kontakt mit den aus Kupfer, Aluminium oder dgl. elektrisch leitendem Material bestehenden Ableitern in Verbindung steht, ist auch ein guter Wärmeübergang zwischen den Ableitern und dem Temperierelement gegeben. Dadurch kann die in einem Akkupack anfallende Verlustwärme über die Ableiter und das Temperierelement unmittelbar an das Wärmeträgermedium weitergeleitet werden, wodurch eine rasche und effiziente Wärmeabfuhr erzielt ist.

Die Temperierelemente eines Akkupacks sind in einem gemeinsamen Träger aus einem elektrisch isolierenden Material gehalten, wobei Wandabschnitte der Kanäle in dem Träger ausgebildet sind und die Kanäle von einem Boden verschlossen sind. Jedes Temperierelement steht auf dem Boden auf und wird durch einen Steg des Bodens verschlossen, wodurch das Temperierelement einen geschlossenen Kanalabschnitt ausbildet, der von dem elektrisch nicht-leitenden Medium durchströmt ist, wodurch ein Kurzschluss mit anderen in der Reihe durchströmten Temperierelementen vermieden ist. Die durch ein Temperierelement elektrisch miteinander verbundenen Ableiter durchragen den Boden und liegen an dem Profilkörper des Temperierelementes an. Bei konstruktiv kompaktem Aufbau ist mit geringem Aufwand eine effektive Kühlung des Akkupacks erzielt.

Die Temperierelemente eines Akkupacks sind vorteilhaft in dem gemeinsamen Träger eingespritzt, der zweckmäßig aus Kunststoff besteht.

Jedes Temperierelement besteht vorzugsweise aus einem Stranggussprofil. Als Material für die Temperierelemente hat sich Aluminium als zweckmäßig erwiesen.

Das Wärmeträgermedium ist vorteilhaft in einem Temperierkreislauf gerührt, wobei mehrere Temperierelemente eines Akkupacks an einen gemeinsamen Temperierkreislauf angeschlossen sind. Vorteilhaft sind alle Temperierelemente eines Akkublocks an einen gemeinsamen Temperierkreislauf angeschlossen.

Jedes Temperierelement weist insbesondere eine Aufnahme für ein Thermoelement auf. Dieses ist vorteilhaft in einem Sackloch des Temperierelementes aufgenommen, wobei die Thermoelemente mehrerer Temperierelemente an eine gemeinsame Platine angeschlossen sind, die vorteilhaft von den Profilkörpern der Temperierelemente getragen ist.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind:

Es zeigen:
- Fig. 1: eine perspektivische Ansicht eines Akkublocks,
- Fig. 2: einen schematischen Längsschnitt durch den Akkublock nach Fig. 1,
- Fig. 3: eine schematische, perspektivische Ansicht auf einen im Akkublock angeordneten Akkupack,
- Fig. 4: eine Detailansicht auf den Kontaktbereich der Akkuzellen des Akkupacks,
- Fig. 5: einen schematischen Schnitt durch den Kontaktbereich der Akkuzellen,
- Fig. 6: in vergrößerter Darstellung einen Schnitt durch einen Kontaktkeil,
- Fig. 7: eine schematische, perspektivische Ansicht des Trägers für Temperierelemente,
- Fig. 8: einen schematischen Schnitt durch den Deckel des Gehäuses,
- Fig. 9: ein Temperierelement in weiteren Ausführungsformen,
- Fig. 10: eine schematische Ansicht auf die Ausbildung einer Kontaktfläche eines Temperierelementes,
- Fig. 11: einen Schnitt durch einen am Temperierelement kontaktierten Ableiter.

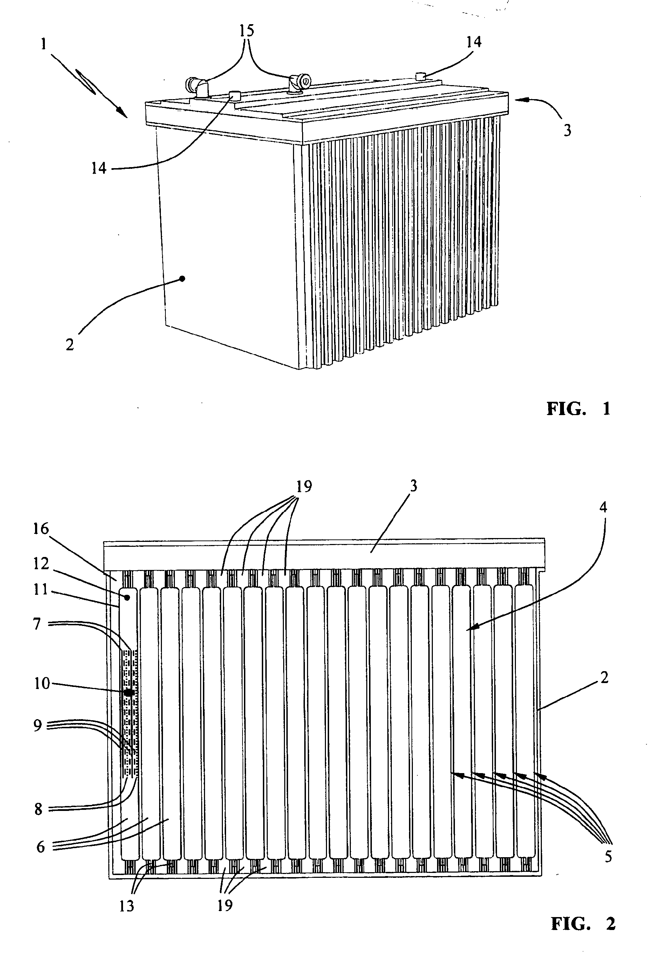

In Fig. 1 ist ein Akkublock 1 dargestellt, der ein Gehäuse 2 und einen das Gehäuse 2 verschließenden Deckel 3 aufweist. Wie sich aus dem Schnitt nach Fig. 2 ergibt, ist im Gehäuse 2 ein Akkupack 4 aus einer Vielzahl von Einzelzellen 5 angeordnet, die im Gehäuse 2 des Akkublocks 1 mechanisch fest gehalten sind. Im gezeigten Ausfiihrungsbeispiel ist die Einzelzelle als Akkuflachzelle 6 aufgebaut, auch Pouchzelle genannt, die vorzugsweise auf Lithium basiert, z. B. eine Li Ion-Zelle ist. Die Erfindung ist auch mit Zellen anderer chemischer Struktur anwendbar.

Wie in Fig. 2 an der linken Zelle 6 schematisch dargestellt, besteht diese aus einer Vielzahl von aufeinandergeschichteten Kathodenfolien 7 und Anodenfolien 8, die jeweils durch dazwischen angeordnete Separatorfolien 9 voneinander getrennt sind. Die Kathodenfolien sind mit einem Kathodenableiter 17 und die Anodenfolien mit einem Anodenableiter 18 verbunden. Das Folienpaket 10 ist in eine Gehäusefolie 11 eingeschlagen, welche ein Foliengehäuse 12 bildet. Das Foliengehäuse ist umlaufend dicht verschlossen, z. B. durch eine umlaufende Siegelnaht 13. Im Foliengehäuse 12 ist eine Elektrolytlösung eingefüllt.

Die meist aus einer Kupferfolie bestehende Anodenfolie 8 ist innerhalb des Foliengehäuses 12 mit dem Anodenableiter 18 verbunden, der durch die Siegelnaht 13 nach außen geführt ist. Entsprechend ist die vorzugsweise aus einer Aluminiumfolie bestehende Kathodenfolie 7 im Foliengehäuse 12 mit dem Kathodenableiter 17 elektrisch leitend verbunden, der ebenfalls durch die Siegelnaht 13 nach außen geführt ist.

Das Gehäuse 2 des Akkublocks 1 ist durch den Deckel 3 vorzugsweise gas- und flüssigkeitsdicht verschlossen, wobei im Deckel 3 die elektrischen Anschlusspole 14 des Akkublocks 1 nach außen geführt sind.

Am Deckel 3 sind ferner Anschlüsse 15 vorgesehen, über die der Akkublock 1 an ein strömendes Wärmeträgermedium angeschlossen ist, über das Verlustwärme aus dem Akkublock 1 abgeführt oder bei zu niedrigen Temperaturen dem Akkublock 1 Wärme zugeführt werden kann.

Der Innenraum 16 des Akkugehäuses 2 ist aufgrund der mechanisch gehaltenen und im Gehäuse 2 angeordneten Akkuflachzellen 6 in eine Vielzahl von Hohlräumen 19 aufgeteilt. Zweckmäßig ist vorgesehen, dass die Hohlräume 19 des Innenraums 16 untereinander in mittelbarer oder unmittelbarer Strömungsverbindung stehen. Vorzugsweise stehen alle Hohlräume 19 des Innenraums 16 eines Akkugehäuses 2 miteinander in mittelbarer oder unmittelbarer Strömungsverbindung.

Oberhalb der Akkuflachzellen 6 ist im Bereich des Deckels 3 ein Boden 20 vorgesehen, der eine Vielzahl von Schlitzen 21 aufweist, die von den Ableitern 17, 18 durchragt sind. Ein Anodenableiter 18 einer ersten Zelle 5 bzw. 6 und ein Kathodenableiter 17 einer benachbarten Zelle 5 bzw. 6 liegen an einem gemeinsamen Temperierelement 30 an, welches aus einem elektrisch leitenden Material besteht. Vorteilhaft besteht das Temperierelement aus Aluminium.

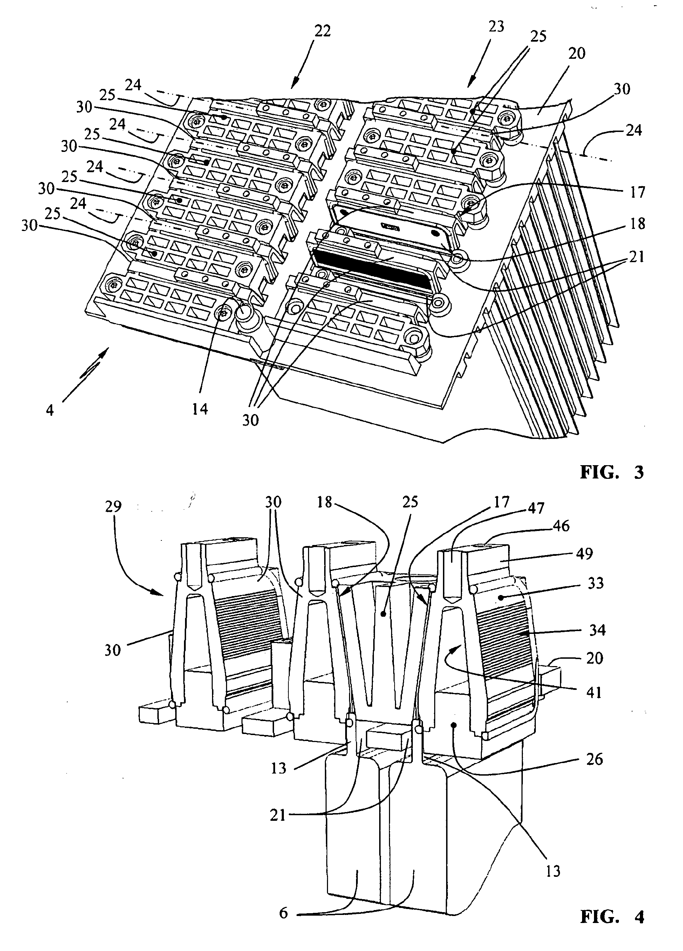

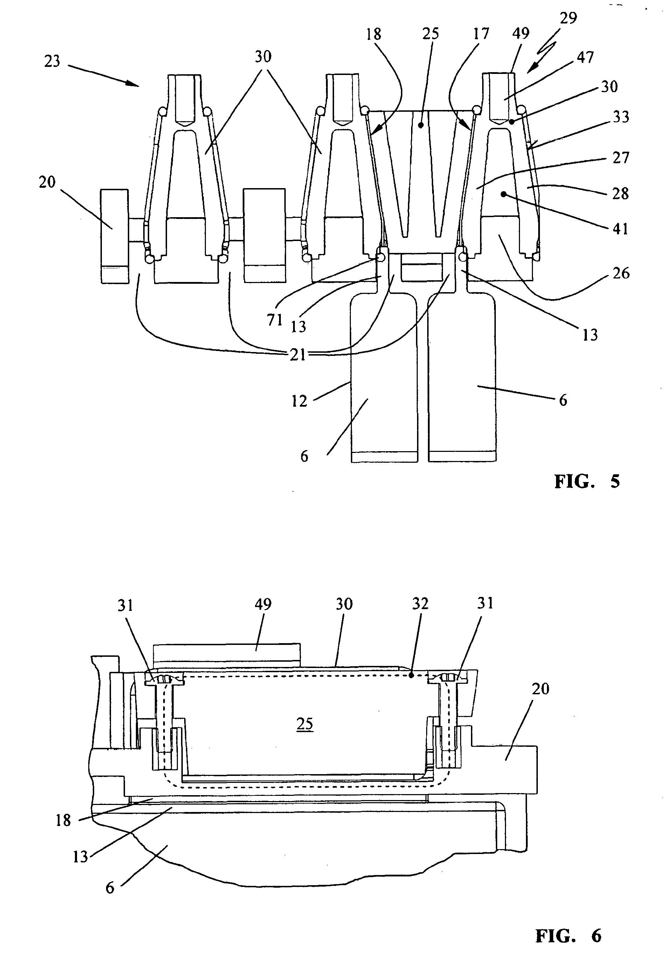

Aufgrund seiner Leitfähigkeit bildet das Temperierelement 30 die elektrische Verbindung zwischen den anliegenden Ableitern 17 und 18, also die elektrische Verbindung zwischen dem Anodenableiter 18 und dem Kathodenableiter 17. Wie Fig. 3 zeigt, sind auf dem Boden 20 zwei nebeneinander liegende Reihen 22 und 23 von Temperierelementen 30 vorgesehen, wobei die Temperierelemente in einer Reihe 22 bzw. 23 mit ihren Längsachsen 24 zueinander parallel liegen. Ein inniger Kontakt der Ableiter 17 und 18 mit dem jeweilig zugeordneten Temperierelement 30 wird durch einen Klemmkeil 25 erzielt, der - vgl. die Fig. 4 und 5 - zwischen zwei benachbarten Temperierelementen 30 einer Reihe 22 bzw. 23 eingesetzt ist. Der Klemmkeil 25 winkelt die durch den Schlitz 21 im Boden 20 ragenden Ableiter 17 und 18 jeweils zu dem zu kontaktierenden Temperierelement 30 ab.

Jedes Temperierelement 30 steht auf dem Boden 20 auf; im gezeigten Ausführungsbeispiel ragt ein Steg 26 des Bodens 20 in das zum Boden 20 offene Temperierelement 30 ein und verschließt dieses. Zugleich stützt der Steg 26 die Seitenwände 27 und 28 mechanisch gegeneinander ab, so dass die von dem Klemmkeil 25 aufgebrachten Klemmkräfte sicher abgestützt sind.

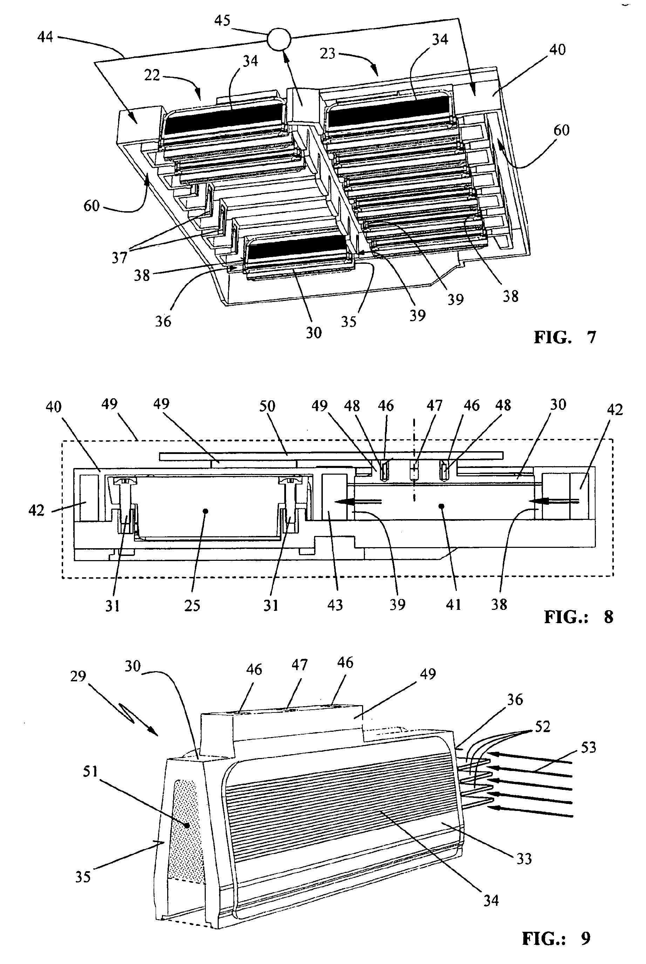

Vorzugsweise besteht das Temperierelement aus einem Profilkörper, insbesondere einem im Querschnitt U-förmigen Profilkörper 29. Der Profilköper 29 ist zweckmäßig ein Stranggussprofil aus einem elektrisch leitenden Material, insbesondere aus Aluminium. Es kann zweckmäßig sein, den Profilkörper 29 eines Temperierelementes 30 geschlossen auszuführen, wie beispielhaft in Fig. 9, links strichliert dargestellt ist.

Jeder Klemmkeil 25 ist über Befestigungsschrauben 31 am Boden 20 festgeschraubt, so dass die Schraubkräfte wie die Druckkräfte des Klemmkeils 25 gemeinsam in den Boden 20 eingeleitet werden. Wie Fig. 6 zeigt, ist die Schraubbefestigung des Klemmkeils 25 derart vorgesehen, dass ein geschlossener Kraftfluss 32 gegeben ist. Um eine gute Kontaktierung zu gewährleisten, hat das Temperierelement 30 auf seiner Kontaktfläche 33 eine Aufrauung, die bevorzugt aus rippenartigen Erhebungen 34 besteht. Beim Anpressen der Ableiter 17, 18 dringen diese Erhebungen 34 unter Verformung in das Material der Ableiter 17, 18 ein, wodurch ein elektrisch inniger Kontakt mit geringem Übergangswiderstand erzielt ist.

Die Anordnung der Temperierelemente 30 ist so vorgesehen, dass mehrere Temperierelemente 30 in einem gemeinsamen Träger 40 gehalten sind. Wie Fig. 7 zeigt, ist der Träger 40 so ausgebildet, dass die Stirnseiten 35 und 36 eines Temperierelementes 30 in angepassten Aufnahmen 37 liegen und dort gehalten sind. Zweckmäßig sind alle Temperierelemente 30 eines Akkupacks 4 in einem gemeinsamen Träger 40 gehalten, insbesondere in dem Material des Trägers 40 eingespritzt. Das Material ist ein elektrisch isolierendes Material und besteht insbesondere aus Kunststoff, zweckmäßig aus einem glasfaserverstärkten Kunststoff.

Jedes Temperierelement 30 hat auf seiner Stirnseite 35, 36 eine Öffnung, die als Einlass 39 oder Auslass 38 für ein strömendes Medium ausgebildet ist. Jedes Temperierelement 30 bildet durch seine Anordnung auf dem Boden 20 und dem dichtend eingreifenden Steg 26 einen geschlossenen Kanalabschnitt 41 aus, der durch die Seitenwände 27 und 28 des Profilkörpers 29 und den Steg 26 des Bodens 20 begrenzt ist. Das elektrisch nicht-leitende Medium wie Gas oder Flüssigkeit durchströmt das aus einem elektrisch leitfähigen Material bestehende Temperierelement 30, wobei das Medium als Wärmeträger sowohl Wärme aus dem Temperierelement 30 abführen kann, als auch Wärme dem Temperierelement 30 zuführen kann. Hierzu sind der Einlass 39 und der Auslass 38 eines Temperierelementes 30 mit einem Medium zuführenden Kanal 42 sowie einem Medium abführenden Kanal 43 verbunden. Dabei ist der Kanal 42 bzw. 43 zu einem Teil 60 im Träger 40 ausgebildet und wird vom Boden 20 dicht verschlossen.

Wie Fig. 7 zeigt, werden alle Einlässe 38 der Temperierelemente 30 der Reihe 22 von einem Seitenkanal 42 gespeist, während alle Einlässe 38 der Temperierelemente 30 der parallelen Reihe 23 von dem auf der anderen Längsseite verlaufenden Seitenkanal 42 gespeist sind.

Wie in Fig. 7 schematisch angedeutet, ist das in den Kanälen 42 und 43 zirkulierende Medium in einem Temperierkreislauf 44 geführt, der z. B. eine Pumpe 45 enthält. Der Sauganschluss der Pumpe 45 ist an den Medium abführenden Kanal 43 angeschlossen; ihre Sauganschlüsse speisen die Medium zuführenden Kanäle 42. Damit sind mehrere Temperierelemente 30 eines Akkupacks 4 an einen gemeinsamen Temperierkreislauf 44 angeschlossen; im gezeigten Ausführungsbeispiel sind alle Temperierelemente 30 eines Akkupacks 4 an einen gemeinsamen Temperierkreislauf 44 angeschlossen.

Das verwendete Medium ist ein Wärmeträgermedium in Form von Gas oder Flüssigkeit. Das Medium ist nicht-leitend, damit die elektrisch leitenden Temperierelemente 30, die jeweils unterschiedliche elektrische Potenziale haben, trotz dem Durchfluss des gleichen Mediums elektrisch voneinander getrennt sind.

In Weiterbildung der Erfindung weist jedes Temperierelement 30 - vgl. Fig. 8 - zumindest eine Aufnahme 46 für ein Thermoelement 48 auf. Im gezeigten Ausführungsbeispiel sind zwei Aufnahmen 46 ausgebildet, die als Sackloch im Material des Temperierelementes 30 ausgebildet sind. Bevorzugt weist das Temperierelement 30 eine Rippe 49 auf, in der die Aufnahmen 46 eingebracht sind. Jedes Thermoelement 48 ist mit einer Schaltung auf einer Platine 50 verbunden, um das Temperaturniveau an jedem Ableiter 17 bzw. 18 zu überwachen. Durch Anordnung von zwei Thermoelementen 48 in den Aufnahmen 46 wird eine redundante Sicherheit erreicht.

Die Platine 50 ist mechanisch auf den den Träger 40 durchragenden Rippen 49 gehalten, wozu in den Rippen Schraublöcher 47 vorgesehen sind, in welche Befestigungsschrauben zur mechanischen Fixierung der Platine 50 auf den Temperierelementen 30 eingeschraubt werden.

Das Temperierelement 30 kann auch in anderer Weise in Wärme übertragender Verbindung mit einem Medium stehen. In einer einfachen Ausgestaltung, wie sie in Fig. 9 dargestellt ist, ist der innere Kanalabschnitt 41 des Temperierelementes 30 mit einem Werkstoff 51 gefüllt, der unter Änderung seiner Phase Wärme absorbiert. Somit können kurzfristige Temperaturerhöhungen im Kontaktbereich gedämpft werden.

In einer weiteren Ausgestaltung des Temperierelements 30 kann eine Stirnseite 36 mit Rippen 52 versehen werden, welche als Kühlrippen dienen. Die Rippen werden von einem Wärmeträger 53 angeströmt, der gasförmig oder flüssig sein kann. So können die Rippen 52 in einen Kanal, z. B. den Kanal 43, einragen. Ein durch den Kanal 43 strömendes Medium wird über die Rippen 52 Wärme übertragen, sei es zur Kühlung des Temperierelementes 30 oder zu dessen Erwärmung.

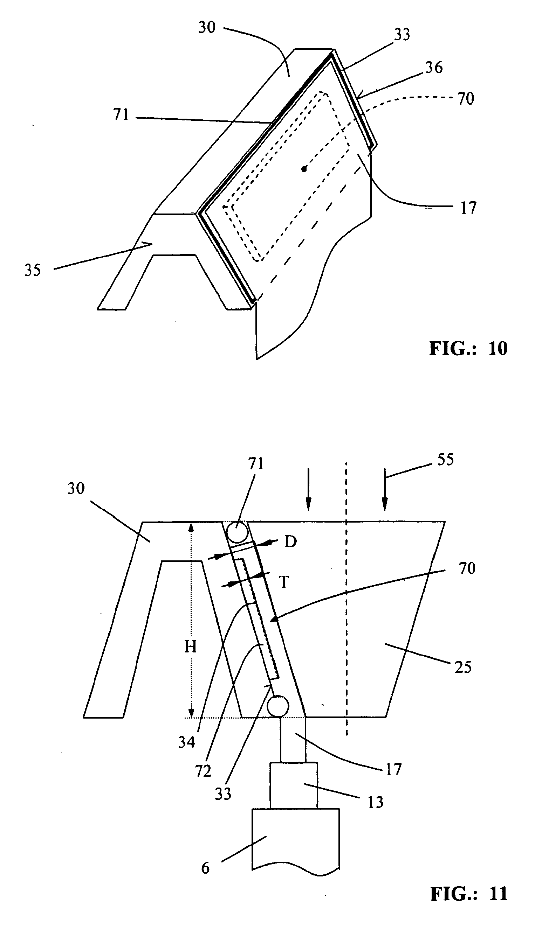

In den Fig. 10 und 11 ist eine besondere, vorteilhafte Kontaktierung eines Ableiters 17 auf der Kontaktfläche 33 eines Temperierelementes 30 wiedergegeben. Wie Fig. 10 zu entnehmen, ist auf der Kontaktfläche 33 ein erhabener Kontaktbereich 70 ausgebildet, der in seinen Abmessungen kleiner als die Kontaktfläche 33 vorgesehen ist und ähnlich einem Podest 72 aus der Kontaktfläche 33 vorsteht. Die Fläche des Kontaktbereichs 70 ist kleiner als die Fläche des Ableiters 17, so dass - wie Fig. 10 wiedergibt - der Ableiter 17 den Kontaktbereich 70 vollständig abdeckt und auf der den Kontaktbereich 70 umgebenden Kontaktfläche 33 aufliegt.

Aus dem Schnitt in Fig. 11 ist zu erkennen, wie der Ableiter 17 durch das Druckstück 25 auf den Kontaktbereich 70 und die Kontaktfläche 33 aufgedrückt wird. Dabei ist die Materialwahl so getroffen, dass sich der Kontaktbereich 70 prägend in den Ableiter 17 drückt, so dass - ist das Druckstück 25 in Befestigungsrichtung SS festgelegt - nicht nur eine kraftschlüssige Kontaktierung des Ableiters 17 auf der Kontaktfläche 33 des Temperierelements 30 erzielt ist, sondern gleichzeitig eine Art formschlüssige Verankerung des Ableiters 18 auf dem Podest 72 des Temperierelementes 30 gewährleistet ist. Diese Art der Kontaktierung ist widerstandsfähig gegen Stoßbelastungen, Vibrationen und eventuell nachlassender Andrückkraft. Das Podest 72 des Kontaktbereichs 70 hat sich - wie die Fig. 10 und 11 schematisch wiedergeben - über seine gesamte Fläche in den flächenmäßig größer ausgebildeten Ableiter 18 eingepresst, so dass aufgrund der Materialverformung auch eine fast stoffschlüssige Verbindung erzielt ist. Dadurch ist insbesondere eine innige Kontaktierung von einem aus Aluminium bestehenden Ableiter 17 gewährleistet, da aufgrund der Materialverformung eine Aluminiumoxidschicht durchbrochen wird, die eine elektrische Kontaktierung behindern könnte. Eine gute stoffschlüssige Verbindung kann auch durch Schweißen oder Löten erreicht werden.

Um nach der Kontaktierung eine Korrosion im Kontaktbereich 70 zu vermeiden ist vorgesehen, die gesamte Kontaktfläche 33 durch eine umlaufende Dichtung 71 gegen die Umgebung abzudichten, wobei die Dichtung 71 vorzugsweise zwischen dem Druckstück 25 und dem Temperierelement 30 geklemmt gehalten ist. Wie Fig. 10 zeigt, verläuft die Dichtung 71 im Fußbereich des Ableiters 18 zwischen der Kontaktfläche 33 des Temperierelements 30 und dem Ableiter 17. Auch ist eine Anordnung zwischen der Siegelnaht 13 des Foliengehäuses 12 vorteilhaft, wie in Fig. 5 dargestellt.

Außerhalb des Fußbereiches verläuft die Dichtung 71 zwischen dem Druckstück 25 und der Kontaktfläche 33 des Temperierelementes 30, so dass der Ableiter 17 an seinen Längskanten von der Dichtung 71 umrandet ist. Wie in Fig. 11 gezeigt, liegt die umlaufende Dichtung 71 als Dichtring innerhalb der Höhe H des Druckstücks 25.

Wie Fig. 11 zeigt, hat der Ableiter 17 eine Dicke D, die etwa im Bereich von 0,2 bis 0,4 mm liegen kann. Das Podest 72 prägt sich in das Material des Ableiters 17 über eine Tiefe T von etwa 50 % der Materialstärke des Ableiters 17 ein, im gezeigten Ausführungsbeispiel über eine Tiefe T von etwa 0,1 bis 0,2 mm. Im Bereich der Längskanten des Podestes 72 wird dadurch ein Übergreifen bzw. Hintergreifen erreicht, was einen Formschluss herstellt.

Für eine bessere elektrische Kontaktierung ist die dem Ableiter 17 zugewandte Fläche des Kontaktbereichs 70 aufgeraut, z. B. mit Erhebungen 24 wie Längsrippen, Stegen oder punktförmigen Warzen versehen.

## Patentansprüche

1. Akkupack, bestehend aus einer Mehrzahl einzelner Akkuzellen (5), insbesondere Akkuflachzellen (6), die jeweils einen Kathodenableiter (17) und einen Anodenableiter (18) aufweisen, wobei je zwei Ableiter (17, 18) benachbarter Akkuzellen (5) elektrisch leitend miteinander verbunden sind, und die Ableiter (17, 18) an einem Temperierelement (30) anliegen, wobei das Temperierelement (30) aus einem Profilkörper (29) gebildet ist und aus einem elektrisch leitenden Material besteht und als Kontaktbrücke die elektrische Verbindung zwischen den Ableitern (17, 18) herstellt, und der Profilkörper (29) einen offenen Querschnitt mit einem Einlass (38) und einem Auslass (39) aufweist, und der Einlass (38) mit einem Medium zuführenden Kanal (42) aus einem elektrisch nicht-leitenden Material und der Auslass (39) mit einem Medium abführenden Kanal (43) aus einem elektrisch nicht leitenden Material verbunden ist und das Temperierelement (30) in wärmeübertragender Verbindung mit einem strömenden Medium steht,
**dadurch gekennzeichnet, dass** mehrere, Temperierelemente (30) bildende Profilkörper (29) des Akkupacks (4) in einem gemeinsamen Träger (40) aus einem elektrisch isolierenden Material gehalten sind und zumindest Wandabschnitte der Kanäle (42, 43) in dem Träger (40) ausgebildet sind und die Kanäle (42, 43) von einem Boden (20) verschlossen sind, wobei jedes Temperierelement (30) auf dem Boden (20) aufsteht, durch einen Steg (26) des Bodens (20) verschlossen ist und einen geschlossenen Kanalabschnitt (41) ausbildet, und die durch ein Temperierelement (30) elektrisch miteinander verbundenen Ableiter (17, 18) den Boden (20) durchragen und an dem Profilkörper (29) des Temperierelementes (30) anliegen.

2. Akkupack nach Anspruch 1,
**dadurch gekennzeichnet, dass** die Temperierelemente in dem gemeinsamen Träger eingespritzt sind, der zweckmäßig aus Kunststoff besteht.

3. Akkupack nach Anspruch 1 oder 2,
**dadurch gekennzeichnet, dass** der Profilkörper (29) ein Stranggussprofil ist.

4. Akkupack nach einem der Ansprüche 1 bis 3,
**dadurch gekennzeichnet, dass** das Temperierelement (30) aus Aluminium besteht.

5. Akkupack nach einem der Ansprüche 1 bis 4,
**dadurch gekennzeichnet, dass** das Medium in einem Temperierkreislauf (44) geführt ist und mehrere Temperierelemente (30) eines Akkupacks (4) an einen gemeinsamen Temperierkreislauf (44) angeschlossen sind.

6. Akkupack nach einem der Ansprüche 1 bis 5,
**dadurch gekennzeichnet, dass** das Temperierelement (30) eine Aufnahme (46) für ein Thermoelement (48) aufweist.

7. Akkupack nach Anspruch 6,
**dadurch gekennzeichnet, dass** die Thermoelemente (48) mehrerer Temperierelemente (30) an eine gemeinsame Platine (50) angeschlossen sind, und die Platine (50) von den Profilkörpern (29) der Temperierelemente (30) getragen ist.

## Claims

1. Battery pack, comprising a plurality of individual battery cells (5), in particular battery flat cells (6), each of which has a cathode arrester (17) and an anode arrester (18), wherein two arresters (17, 18) each of adjacent battery cells (5) are connected to one another for electric conduction and the arresters (17, 18) abut a tempering element (30), wherein the tempering element (30) is represented by a profiled body (29) and consists of an electrically conductive material and establishes the electric connection between the arresters (17, 18) by acting as a contact bridge, and wherein the profiled body (29) has an open cross-section with an inlet (38) and an outlet (39) and the inlet (38) is connected to a medium supply passage (42) made of an electrically non-conductive material and the outlet (39) is connected to a medium discharge passage (43) made of an electrically non-conductive material, and wherein the tempering element (30) is connected to a flowing medium for heat transfer,
**characterised in that** several profiled bodies (29) representing tempering elements (30) of the battery pack (4) are held in a common carrier (40) made of an electrically insulating material and at least wall sections of the passages (42, 43) are formed in the carrier (40) and the passages (42, 43) are closed by a base (20), wherein each tempering element (30) stands on the base (20), is closed by a web (26) of the base (20) and forms a closed passage section (41), and wherein the arresters (17, 18) which are electrically connected to one another by a tempering element (30) project through the base (20) and abut against the profiled body (29) of the tempering element (30).

2. Battery pack according to claim 1,
**characterised in that** the tempering elements are introduced into the common carrier, which is expediently made of a plastic material, by injection moulding.

3. Battery pack according to claim 1 or 2,
**characterised in that** the profiled body (29) is an extruded profile.

4. Battery pack according to any of claims 1 to 3,
**characterised in that** the tempering element (30) is made of aluminium.

5. Battery pack according to any of claims 1 to 4,
**characterised in that** the medium is carried in a tempering circuit (44) and several tempering elements (30) of the battery pack (4) are connected to a common tempering circuit (44).

6. Battery pack according to any of claims 1 to 5,
**characterised in that** the tempering element (30) comprises a receptacle (46) for a thermocouple (48).

7. Battery pack according to claim 6,
**characterised in that** the thermocouples (48) of several tempering elements (30) are connected to a common printed circuit board (50) and the printed circuit board (50) is supported by the profiled bodies (29) of the tempering elements (30).

## Revendications

1. Batterie composée de plusieurs éléments d'accumulateur individuels (5), en particulier d'éléments d'accumulateur plats (6), qui comportent chacun un collecteur cathodique (17) et un collecteur anodique (18), étant précisé que deux collecteurs (17, 18) d'éléments d'accumulateur (5) voisins sont reliés entre eux de manière conductrice d'électricité et que les collecteurs (17, 18) sont appliqués contre un élément de thermorégulation (30), étant précisé que l'élément de thermorégulation (30) se compose d'un corps profilé (29) et d'un matériau conducteur d'électricité et réalise sous forme de pont de contact la liaison électrique entre les collecteurs (17, 18), et que le corps profilé (29) présente une section transversale avec une entrée (38) et une sortie (39), et que l'entrée (38) est reliée à un conduit (42) qui amène un agent et qui est en matériau non conducteur d'électricité, et la sortie (39) est reliée à un conduit (43) qui évacue un agent et qui est en matériau non conducteur d'électricité, et que l'élément de thermorégulation (30) est en communication conductrice de chaleur avec un agent qui s'écoule,
**caractérisée en ce que** plusieurs corps profilés (29) de la batterie (4) qui forment des éléments de thermorégulation (30) sont maintenus dans un support commun (40) en matériau isolant électriquement, et au moins des sections de paroi des conduits (42, 43) sont formées dans le support (40), et les conduits (42, 43) sont fermés par un fond (20), étant précisé que l'élément de thermorégulation (30) est posé sur le fond (20), est fermé par une branche (26) du fond (20) et forme un tronçon de conduit fermé (41), et que les collecteurs (17, 18) reliés de manière conductrice d'électricité par un élément de thermorégulation (30) traversent le fond (20) et sont appliqués contre le corps profilé (29) de l'élément de thermorégulation (30).

2. Batterie selon la revendication 1,
**caractérisée en ce que** les éléments de thermorégulation sont injectés dans le support commun, qui se compose d'une manière appropriée de matière plastique.

3. Batterie selon la revendication 1 ou 2,
**caractérisée en ce que** le corps profilé (29) est un profilé fabriqué par coulée continue.

4. Batterie selon l'une des revendications 1 à 3,
**caractérisée en ce que** l'élément de thermorégulation (30) se compose d'aluminium.

5. Batterie selon l'une des revendications 1 à 4,
**caractérisée en ce que** l'agent circule dans un circuit de thermorégulation (44), et plusieurs éléments de thermorégulation (30) d'une batterie (4) sont raccordés à un circuit de thermorégulation (44) commun.

6. Batterie selon l'une des revendications 1 à 5,
**caractérisée en ce que** l'élément de thermorégulation (30) présente un logement (46) pour le thermoélément (48).

7. Batterie selon la revendication 6,
**caractérisée en ce que** les thermoéléments (48) de plusieurs éléments de thermorégulation (30) sont raccordés à une platine commune (50), et la platine (50) est portée par les corps profilés (29) des éléments de thermorégulation (30).
